Europäisches Patentamt

European Patent Office

Office européen des brevets

(11) Publication number: **0 300 003 B1**

# EUROPEAN PATENT SPECIFICATION

(45) Date of publication of patent specification: **04.08.93**  (51) Int. Cl.5: **G05D 16/20**

(21) Application number: **88901075.7**

(22) Date of filing: **28.01.88**

(86) International application number:
**PCT/GB88/00053**

(87) International publication number:
**WO 88/05939 (11.08.88 88/18)**

(54) **METHOD OF CONTROLLING A PLURALITY OF MACHINES.**

(30) Priority: **28.01.87 GB 8701926**
**03.11.87 GB 8725701**
**04.01.88 GB 8800008**

(43) Date of publication of application:
**25.01.89 Bulletin 89/04**

(45) Publication of the grant of the patent:
**04.08.93 Bulletin 93/31**

(84) Designated Contracting States:
**AT BE CH DE FR GB IT LI LU NL SE**

(56) References cited:
**EP-A- 0 086 927**
**US-A- 3 787 729**

**IECI 79 PROCEEDINGS-Industrial and Control Applications of Micropro- -cessors, 19-21 March 1979, N. Iwama etal. "A microprocessor-based compressed air supply system" pages 166-171, see the whole document**

**Klimaatbeheersing, volume 13, no. 6, juni**

**1984, (Zeist, NL) A. Kappers: "Volgorderegeling warmte opwekkers", pages 154-160, see page 159, paragraph "Urentellers"**

(73) Proprietor: **Burdett, Savile**
**35 Park Avenue**
**Solihull, West Midlands B91 3EJ(GB)**

(72) Inventor: **Burdett, Savile**
**35 Park Avenue**
**Solihull, West Midlands B91 3EJ(GB)**

(74) Representative: **Leach, John Nigel et al**
**FORRESTER & BOEHMERT Franz-Joseph-Strasse 38**
**W-8000 München 40 (DE)**

# Description

Description of Invention

This invention relates to a method of controlling at least three air compressors each of which produces compressed air when operative, thus contributing a total compressed air capacity of a system.

Conventionally, a plurality of air compressors of the same nominal capacity are operated in a cascade mode such as described in EP 086927. In such an arrangement, when the demand for compressed air increases so that the available pressure falls below a first threshold pressure, an additional compressor is rendered operative, and when the demand decreases so that the available pressure rises above a second threshold pressure, the additional air compressor is rendered inoperative. So that the capacity can be generally matched to the demand, an air compressor, called a balance air compressor is cycled between operative and inoperative conditions to maintain the pressure within a selected pressure range bounded by the first and second threshold pressures.

Devices are known which can estimate how long the balance compressor is likely to remain inoperative, and when this time is less than a predetermined time, instead of turning the air compressor to an off state, the air compressor is rendered inoperative by turning to an off load state in which the compressor continues to run but does not contribute to the total capacity of the system. This protects the balance compressor from too frequent switching on and off.

Obviously in such a system, the air compressors are not used equally resulting in uneven wear of the individual air compressors. Even when a compressor is run in an off load state, the air compressor is subject to wear, and wastefully uses power.

Thus it has been proposed alternatively to operate a plurality of air compressors in a sequencing mode in which when it is desired to increase the capacity of the system as the pressure falls below a first threshold pressure, the air compressor which has been rendered inoperative for the longest period of time is rendered operative, and when it is desired to decrease the capacity of the system as the pressure rises above a second threshold pressure the air compressor which has been operative for the longest period of time is rendered inoperative. This method is particularly useful where the air compressors are all of the same general rated capacity. All of the air compressors operated in the sequencing mode are used generally equally and usually, the air compressors are turned off rather than being run in an off load state.

However, under certain load conditions it is possible for the cycle time between when any air compressor is rendered inoperative to when the same compressor is rendered operative again to be too small which would result in too frequent switching and this could result in damage to motors of the air compressor.

A system of controlling a plurality of air compressors, using a microprocessor, in accordance with a control algorithm, is disclosed in IECI '79 Proceedings - Industrial and control applications of microprocessors March 19-21 1979. In the system described, the air compressors controlled are all of the same nominal capacity and the microprocessor is responsible for switching on or off an air compressor in response to changing demand both to maintain the supply pressure as close as possible to the expected demand, and to release the total no load running time of the compressors.

It is an object of the present invention to provide a new or improved method of operating a plurality of machines.

According to a first aspect of the invention I provide a method of operating at least three air compressors each of which produces compressed air when operative, thus contributing to a total compressed air capacity of a system, the method comprising sensing with a sensing means the value of a variable parameter of the system, feeding a signal from the sensing means to a control means, programming the control means to estimate from data stored in a memory thereof, and the signal from the sensing means, the expected demand for compressed air from the system in the immediate future, characterised in that at least one of the air compressors is of a different nominal rated capacity to the others, the control means selecting at least one air compressor to be rendered operative when it is necessary to increase the capacity of the system so that the capacity of the system is at least as great as and close to the expected demand for the immediate future and the control means selecting at least one air compressor to be rendered inoperative when it is necessary to decrease the capacity of the system to match expected demand, so that the capacity of the system does not fall substantially below the expected demand in the immediate future, and when a selected air compressor is to be rendered inoperative the control means calculates an expected period, from the expected demand and the stored data, for which the selected air compressor is expected to remain inoperative before being rendered operative again, and where the expected period is greater than a predetermined time the control means rendering the selected air compressor inoperative by turning the air compressor to an off state and when the expected period is less than the predetermined time the control means rendering the selected air compressor inoperative by turning the air compressor to an off load state in which the selected air compressor continues to run but does not contribute to the compressed air capacity of the system.

According to a second aspect of the invention I provide a method of operating at least three air compressors each of which produces compressed air when operative, thus contributing to a total compressed air capacity of a system, the method comprising sensing with a sensing means the value of a variable parameter of the system, feeding a signal from the sensing means to a control means, programming the control means to estimate from data stored in a memory thereof, and the signal from the sensing means, the expected demand for compressed air from the system in the immediate future, characterised in that the air compressors are each of the same nominal rated capacity, and the control means is capable of operating the air compressors in a cascade mode in which when it is necessary to decrease the capacity of the system to match expected demand, a selected air compressor is rendered inoperative and when at a future time it is necessary to increase the capacity of the system to match the capacity of the system to the expected demand the selected air compressor is rendered operative again, and alternatively in a sequencing mode in which when it is necessary to decrease the capacity of the system to match expected demand, the first air compressor of the operative air compressors to have been rendered operative is rendered inoperative and when it is necessary to increase the capacity of the system to match the capacity of the system to the expected demand, the first air compressor of the inoperative air compressors to have been rendered inoperative is rendered operative again, the control means calculating from the expected demand and data stored in the memory of the control means, as if operating the air compressors in sequencing mode, an estimated time from when the next of the operative air compressors is to be rendered inoperative to when the air compressor is to be rendered operative again and when the estimated time is less than a preset time, the control means operating the air compressors in a cascade mode, and rendering the air compressor inoperative by turning the air compressor to an off load state in which the air compressor continues to run but does not contribute to the compressed air capacity of the system until it is necessary to increase the capacity of the system again when the inoperative air compressor running in an off load state is again rendered operative, and when the estimated time is greater than the preset time, the control means operating the air compressors in a sequencing mode and rendering the air compressor inoperative by turning the air compressor to an off state.

In each case the control means can select an air compressor or air compressors to be rendered or maintained operative or maintained or rendered inoperative to provide the most efficient use of the air compressors within given constraints which can be programmed into and stored in the memory of the control means.

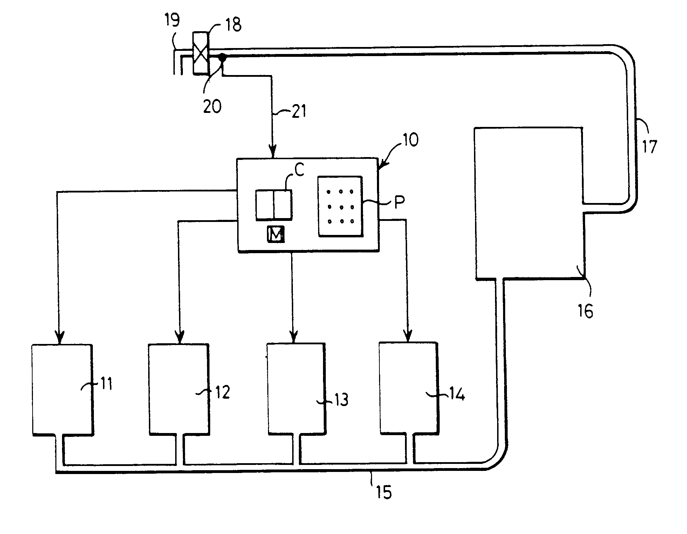

The invention will now be described with reference to the accompanying drawing which is an illustrative view of an apparatus comprising a plurality of air compressor machines which may be controlled by a method in accordance with the invention.

The apparatus comprises a control means 10 which controls a plurality of air compressor machines 11-14, four in the present example, although if desired, the control means 10 may be arranged to control more or less than four machines as required.

Each of the air compressors 11-14 when operative, produces compressed air which is fed along a supply line 15 to a storage receiver 16 from where compressed air may be drawn off for use along a delivery line 17 to a delivery point 19. A valve 18 is provided at the point of delivery 19 so that the escape of compressed air from the delivery line 17 may he controlled. The air is used to power machines for example, in a factory environment.

If desired, the delivery line 17 may deliver compressed air to more than one point of delivery.

The control means 10 is a suitably programmed computer which may be dedicated to control the air compressors 11-14 or may be part of a larger computer system. In each case, the control means 10 has a memory M, a time clock c, and a control panel P such as a keyboard, so that an operator can provide input commands to the control means 10 to control the machines 11-14.

The air pressure within the delivery line 17 at or adjacent the point of delivery 19, is sensed by an air pressure sensor 20 which provides a signal to the control means 10 along a line 21. Where more than one point of delivery is provided from the delivery line 17, a pressure sensor 20 may be provided at each point of delivery, or a single pressure sensor 20 may be provided at the point of delivery which demands the lowest air pressure as required.

Alternatively, air flow could he sensed or even the position of a movable part of valve 18.

At intervals, the control means 10 responds to the signal of the pressure or other sensing means 20 and uses this reading, and information stored in the memory M, which includes one or more readings taken at prior times and other data, the control means 10 estimates the expected demand for compressed air at the or each point of delivery 19 for the immediate future.

The demand may, for example, be estimated once during a program cycle of the control means so that the intervals may be regular or irregular. Where the intervals are irregular, the length of each interval needs to be timed.

In one example, the control means may estimate the expected demand by applying the formula :-

$$(Q-C) t = Rp.$$

Where Q is the total capacity of the air compressors contributing compressed air to the system at the time of estimation,

C is the demand at the time of estimation,

t is the time since last estimation,

R is the storage size of the system including the storage receiver 16 and all pipework, and,

p is the actual change in pressure since the last estimation of demand.

Hence, by knowing the demand C and preferably the demand at previous times and applying statistical correction, the control means 10 can determine which of the air compressors 11-14 to operate to ensure that the air pressure in the system, or at least at point of delivery 19, remains within a selected pressure range in the immediate future until the demand is re-estimated.

A controller of the apparatus can input into the control means 10 using the keyboard P, constraints under which the control means 10 must operate. For example, the controller may instruct the control means to operate one of the air compressors 11-14 in preference to any other air compressor, wherever possible.

It will be appreciated that there are many other methods by which the control means (10) may be arranged to estimate the expected demand using pressure or flow readings. For example, using the formula above, a value of C may be determined taking account of the change of p only since last estimation although C could be averaged for a plurality of previous estimated and/or otherwise statistically adjusted as required and corrected to give an accurate estimation of demand.

Any other suitable method for estimating demand may be used. If desired, in a simple arrangement e.g. where the delivery line 17 has only one point of delivery 19, the actual flow of the compressed air may be monitored from one time of estimation until the next.

Where the delivery line 17 has a plurality of points of delivery 19, which may each require different amounts of compressed air or a plurality of delivery lines are provided from the storage means 16, the pattern of demand may be very complex and hence complex statistical methods may be required accurately to estimate the expected demand for the immediate future, but in each case, the sensed value of pressure, flow or whatever, along with data stored in the memory are used to estimate expected demand.

Two specific methods of operating the machines 11-14 in accordance with the invention will now be described by way of example only.

Method 1

For this method all of the air compressors 11-14 are of the same nominal rated output capacity and the control means 10 is capable of operating the air compressors 11-14 in either a cascade or a sequencing mode. The machines 11-14 are all three state machines, that is the machines may be operative in an on state during which the machines each contribute to the capacity of the system, or in an off inoperative state when the machines do not run, or in an inoperative off load state in which the machines continue to run but do not contribute to the total capacity of the system.

Assuming for example that air compressors 11,12, are operative and air compressors 13 and 14 are both inoperative in an offstate, at an estimating time, if the sensing means 20 senses that the pressure at the delivery point 19 has fallen sufficiently to indicate increased demand, so the control means 10 determines that another of the air compressors 13 or 14 must be rendered operative so as to increase the capacity of the system to match the demand, and to ensure that the value of the variable parameter i.e. pressure, does not fall below a first threshold value in the immediate future.

The control means 10 applies the formula given above and statistical methods as required, to estimate the expected demand of the system for the immediate future until the demand is re-estimated.

The value of Q is known to be the total capacity of the machines currently operating i.e. air compressors 11 and 12. This data may also be contained in memory M. The value of t may be a selected value which may be programmed into the memory M, using the keyboard P and is fixed or may be a timed period which may vary. For example, the demand may be reestimated at intervals t which may be determined by a cycle time of the program of the control means. R is known from a previous determination, for example, as explained below.

The value of p is calculated from the reading of the pressure sensor 20 and a previous reading of the pressure sensor 20 when demand was last estimated, and is stored in the memory. Hence demand C is estimated, at the estimating time.

As mentioned above, earlier calculated values of C may be used with the latest calculated value to determine the expected demand in the immediate future.

Now when the air compressors 11-14 are operated in sequencing mode, the control means may determine that air compressor 13 is the next machine to be rendered operative according to a predetermined sequence i.e. 11, then 12, then 13, then 14, and so render compressor 13 operative. At the time of next demand estimation, the pressure at the delivery point 19 is sensed again by sensor 20 and the demand is re-estimated.

One of three conditions must ensue.

First, demand has increased relative to capacity and the control means predicts that the pressure sensed will fall below the first threshold pressure, in the immediate future. The control means 10 responds by rendering operative the air compressor 14 which is the next in the sequence.

Second, demand has changed relative to capacity but the control means predicts that the pressure sensed will not rise above the second threshold pressure or fall below the first threshold pressure in the immediate future. The control means 10 responds by maintaining machines 11-13 operative and machine 14 inoperative.

Third, demand has fallen relative to capacity and the control means predicts that the pressure sensed will rise above the second threshold value which is greater than the first threshold value in the immediate future. The control means 10 responds by rendering inoperative one of the machines 11-13 so as to decrease the capacity of the system, the machine 11-13 to be rendered inoperative being selected depending on the expected demand and data stored in the memory.

As the control means 10 is operating the machines in a sequencing mode, the next machine in the predetermined sequence to be rendered inoperative would be machine 11 i.e. machine 11 should be turned off and whenever it is desired to render operative one of the machines 11 or 14, the control means 10 would ordinarily respond by rendering machine 14 operative because machine 14 had been rendered inoperative prior to machine 11.

However, the control means 10 is arranged to predict how long it will be before machine 11 is to be rendered operative again. If this time is greater than a preset off time, the control means 10 continues to operate the machines 11-14 in a sequencing mode as described, and so machine 11 would be turned off.

However if this predicted off time is less than the minimum preset off time, the control means 10 responds by switching operation of the machines 11-14 from a sequencing mode to operate the machines in a cascade mode, and machine 11 instead of being rendered inoperative by turning the machine off, is rendered inoperative by turning the machine to an off load inoperative state. Thus when it is desired to again increase the capacity of the system, machine 11 is rendered operative again, rather than machine 14 being rendered operative.

Thus at every estimation of expected demand, if the control means determines that the capacity of the system is to be decreased i.e. at least one of the machines 11-14 is to be rendered inoperative, the expected demand is used with any data in memory M to decide which machine or machines is or are to be rendered inoperative and whether the machines 11-14 are to be operated in a sequencing or cascade mode.

Thus the net result is that the control means 10 select and renders operative until next estimation of expected demand, machines such that the pressure at delivery point 19 is kept between the first and second threshold pressures, at least for a major portion of the time period between estimations.

Of course, the estimation of expected demand is unlikely ever to be very accurate, but it has been found that the estimation, particularly using previous estimations, results in considerably more efficient use of the machines than hitherto possible, whilst protecting the machines from too frequent switching.

The programming of the control means may ensure that the most efficient machine or combination of machines are used where for example, the required capacity can be obtained by operation of a different machine or different combination of machines.

The operator can input into the control means 10 using the control panel P conditions or constraints under which the control means must operate. For example, if it is known that machine 11 is particularly efficient in operation compared with machines 12-14, for example if the machine 11 is newer, machine 11 may be constrained to operate continuously when appropriate and not be included in any sequencing consideration. The user may input into the control means the values of the first and second threshold pressure values, the value of the preset off time, and in some instances, the value of fixed time intervals t between readings when pressure is sensed and demand is estimated.

The programming of the control means 10 may include safety considerations so that in the event that pressure sensed by sensor 20 (or a further sensor provided in a safety circuit) rises above or falls below a respective safe limit, the system is shut down or otherwise rendered safe or workable.

## Method 2

In this method all of the air compressors 11-14 are of different nominal rated output capacities, for example compressor 12 is capable of producing twice as much compressed air as compressor 11, and compressor 13 three times as much as compressor 11, and compressor 14 four times as much as compressor 11.

If at the end of intervals, at estimating times, the control means 10 determines that it is necessary to increase the capacity of the system in order to keep the pressure within a selected pressure range between an upper second threshold pressure and a lower first threshold pressure in the immediate future, the control means 10 determines which of the available air compressors 11-14 is to be rendered operative.

For example, assuming that only air compressor 13 is operating and the control means estimates that in the immediate future, the demand will increase such that the air pressure at the delivery point 19 will fall below the first threshold pressure, the control means 10 may respond by rendering another of the compressors 11-14 operative, for example compressor 11 where the increase in demand is expected to be small, or where a great increase in demand is expected, compressor 12 may be rendered operative instead or as well, or where a medium increase in demand is estimated, compressor 13 may be rendered inoperative, and compressor 14 rendered operative, or compressors 11 and 12 may be rendered operative whilst compressor 13,14, are inoperative. In each case, the compressors 11-14 which are rendered operative are chosen to match the expected demand as close as possible, whilst the capacities of the compressors 11-14 which are operative are greater than the expected demand. Thus in the immediate future, or at least for a major portion of the time until expected demand is re-estimated, the available pressure at delivery point 19 preferably is kept within a range bounded by the first and second threshold pressure values.

Again, constraints may be input to the control means 10 under which the control means 10 is to operate. For example, an operator may decide that compressor 12 is to be rendered operative whenever possible because for example, compressor 12 is found to operate more efficiently than the other compressors, where for example, compressor 12 is newer.

Both of the two methods described above by way of example only, may, instead of operating individual compressors 11-14, be used to operate groups of compressors or compressors within designated groups.

In each case, the expected demand is used by the control means to determine which of the compressors is to be rendered operative and inoperative to achieve the most efficient use of the system.

In both the methods above, and throughout this specification, by "immediate future" I mean the time until the expected demand is re-estimated which is preferably a short length of time of a few seconds. As explained above, this time may be fixed, or may be variable due to, for example, the cycle time of the program of the control means (10).

To estimate the storage capacity R of the system, the formula given above may be applied when there is no demand from the system i.e. when C is zero. In this case:-

$$Qt = Rp.$$

Q is known provided that the control means (10) can determine the total nominal rated capacity of each operative air compressor 11-14
t is the predetermined time period and p is the increase in pressure during the time t.

Of course, in practice, a system may have small leaks, but the approximation given for the total storage size of the system R will be adequate for determining the expected demand in future time periods.

For improved accuracy, the estimation of R may be repeated iteratively during calibration.

In all of the examples given above, the pressure sensor 20 is positioned at the point of delivery or at least closer to the point of delivery than the storage means. It has been found that by sensing the pressure at this point i.e. closer to the point of delivery than the storage means 16, a more accurate determination of pressure can be achieved resulting in more efficient use of the machines.

It is known that, particularly where the delivery line 17 is long, there is a significant pressure fall along the delivery line 17 which increases as line flow increases. Where, as is conventional, pressure is sensed at or adjacent the storage means 16, the value of at least the first threshold pressure has to be set high to ensure that sufficient pressure is always available at the point of delivery. In accordance with the invention, the lower threshold pressure can be set lower i.e. only slightly above the minimum acceptable pressure at the point of delivery. This contributes to energy saving.

## Claims

1. A method of operating at least three air compressors (11-14) each of which produces compressed air when operative, thus contributing to a total compressed air capacity of a system, the method comprising sensing with a sensing means (20) the value of a variable parameter of the system, feeding a signal from the sensing means (20) to a control means (10), programming the control means (10) to estimate from data stored in a memory (M) thereof, and the signal from the sensing means (20), the expected demand for compressed air from the system in the immediate future, characterised in that at least one of the air compressors is of a different nominal rated capacity to the others, the control means selecting at least one air compressor (11-14) to be rendered operative when it is necessary to increase the capacity of the system so that the capacity of the system is at least as great as and close to the expected demand for the immediate future and the control means (10) selecting at least one air compressor (11-14) to be rendered inoperative when it is necessary to decrease the capacity of the system to match expected demand, so that the capacity of the system does not fall substantially below the expected demand in the immediate future, and when a selected air compressor (11-14) is to be rendered inoperative the control means (10) calculates an expected period, from the expected demand and the stored data, for which the selected air compressor (11-14) is expected to remain inoperative before being rendered operative again, and where the expected period is greater than a predetermined time the control means (10) rendering the selected air compressor inoperative by turning the air compressor (11-14) to an off state and when the expected period is less than the predetermined time the control means (10) rendering the selected air compressor (11-14) inoperative by turning the air compressor (11-14) to an off load state in which the selected air compressor (11-14) continues to run but does not contribute to the compressed air capacity of the system.

2. A method of operating at least three air compressors (11-14) each of which produces compressed air when operative, thus contributing to a total compressed air capacity of a system, the method comprising sensing with a sensing means (20) the value of a variable parameter of the system, feeding a signal from the sensing means (20) to a control means (10), programming the control means (10) to estimate from data stored in a memory (M) thereof, and the signal from the sensing means (20), the expected demand for compressed air from the system in the immediate future, characterised in that the air compressors (11-14) are each of the same nominal rated capacity, and the control means (10) is capable of operating the air compressors (11-14) in a cascade mode in which when it is necessary to decrease the capacity of the system to match expected demand, a selected air compressor (11-14) is rendered inoperative and when at a future time it is necessary to increase the capacity of the system to match the capacity of the system to the expected demand the selected air compressor (11-14) is rendered operative again, and alternatively in a sequencing mode in which when it is necessary to decrease the capacity of the system to match expected demand, the first air compressor of the operative air compressors to have been rendered operative is rendered inoperative and when it is necessary to increase the capacity of the system to match the capacity of the system to the expected demand, the first air compressor (11-14) of the inoperative air compressors (11-14) to have been rendered inoperative is rendered operative again, the control means (10) calculating from the expected demand and data stored in the memory (M) of the control means (10), as if operating the air compressors (11-14) in sequencing mode, an estimated time from when the next of the operative air compressors is to be rendered inoperative to when the air compressor (11-14) is to be rendered operative again and when the estimated time is less than a preset time, the control means (10) operating the air compressors (11-14) in a cascade mode, and rendering the air compressor inoperative by turning the air compressor (11-14) to an off load state in which the air compressor (11-14) continues to run but does not contribute to the compressed air capacity of the system until it is necessary to increase the capacity of the system again when the inoperative air compressor running in an off load state is again rendered operative, and when the estimated time is greater than the preset time, the control means (10) operating the air compressors (11-14) in a sequencing mode and rendering the air compressor (11-14) inoperative by turning the air compressor to an off state.

3. A method according to Claim 1 or Claim 2 characterised in that the data stored in the memory (M) of the control means (10) includes data input by an operator to cause the control means (10) to select at least one of the air compressors (11-14) to be rendered operative or inoperative in preference to an air compressor which would otherwise be selected by the control means (10).

4. A method according to any one of Claims 1 to 3 characterised in that the expected demand is re-estimated at intervals, the lengths of the intervals being dependent on a cycle time of the program of the control means (10) and the data stored in the memory (M) of the control means (10) including data derived from at least one signal from the sensing means (20) indicating the value of the variable parameter at a prior time.

5. A method according to Claim 4 characterised in that the expected demand at the time of estimation is estimated using the formula:

$$(Q - C) t = R p$$

Where Q is the total capacity of the air compressors (11-14) contibuting compressed air to the system at the estimated time,
C is the demand at the time of estimation,
t is the time since the last estimation,
R is the storage size of the system, and
p is the actual change in variable parameter since the last estimation of demand.

6. A method according to any one of the preceding claims characterised in that maximum and minimum values of the variable parameter which are allowed by the control means (10) are changeable by the control means (10) within an absolute value range.

**Patentansprüche**

1. Verfahren zum Betreiben von zumindest drei Luftkompressoren (11 - 14), die im Betrieb jeweils Druckluft herstellen und somit zu einer kompletten Druckluftkapazität eines Systems beitragen, wobei das Verfahren das Erfassen des Wertes eines variablen Systemparameters mittels eines Fühlmittels (20), Beliefern eines Kontrollmittels (10) mit einem Signal von dem Füllmittel (20), Programmieren des Kontrollmittels (10), um mittels in einem Speicher (M) desselben gespeicherter Daten und des Signals von dem Fühlmittel (20) die von dem System in naher Zukunft erwartete Nachfrage nach Druckluft abzuschätzen, umfaßt, dadurch gekennzeichnet, daß zumindest einer der Luftkompressoren eine im Vergleich zu der der anderen unterschiedliche Nennleistung aufweist, wobei das Kontrollmittel zumindest einen wirksam zu machenden Luftkompressor (11 - 14) auswählt, wenn es nötig ist, die Systemkapazität zu erhöhen, so daß die Systemkapazität zumindest so groß wie und naheliegend bei der in naher Zukunft erwarteten Nachfrage ist, und das Kontrollmittel (10) zumindest einen unwirksam zu machenden Luftkompressor (11 - 14) auswählt, wenn es nötig ist, die Systemkapazität zu erniedrigen, um diese an die erwartete Nachfrage anzupassen, so daß die Systemkapazität nicht wesentlich unter die in naher Zukunft erwartete Nachfrage fällt, und daß das Kontrollmittel (10), wenn ein ausgewählter Luftkompressor (11 - 14) unwirksam zu machen ist, aus der erwarteten Nachfrage und den gespeicherten Daten einen erwarteten Zeitraum berechnet, über welchen erwartet wird, daß der ausgewählte Luftkompressor (11 - 14) unwirksam bleibt, bevor er wieder wirksam wird, wobei das Kontrollmittel (10), wenn der erwartete Zeitraum größer als eine vorherbestimmte Zeit ist, den ausgewählten Luftkompressor durch Bringen des Luftkompressors (11 - 14) in einen Aus-Zustand unwirksam macht, und das Kontrollmittel (10), wenn der erwartete Zeitraum kleiner als die vorherbestimmte Zeit ist, den ausgewählten Luftkompressor (11 - 14) durch Bringen des Luftkompressors (11 - 14) in einen unbelasteten Zustand, in welchem der ausgewählte Luftkompressor (11 - 14) weiterhin läuft, aber nicht zu der Druckluftkapazität des Systems beiträgt, unwirksam macht.

2. Verfahren zum Betreiben von zumindest drei Luftkompressoren (11 - 14), die im Betrieb jeweils Druckluft herstellen und somit zu einer kompletten Druckluftkapazität eines Systems beitragen, wobei das Verfahren das Erfassen des Wertes eines variablen Systemparameters mittels eines Fühlmittels (20), Beliefern eines Kontrollmittels (10) mit einem Signal von dem Fühlmittel (20), Programmieren des Kontrollmittels (10), um mittels in einem Speicher (M) desselben gespeicherter Daten und des Signals von dem Fühlmittel (20) die von dem System in naher Zukunft erwartete Nachfrage nach Druckluft abzuschätzen, umfaßt dadurch gekennzeichnet, daß jeder Luftkompressor (11 - 14) die gleiche Nennleistung aufweist, daß das Kontrollmittel (10) die Luftkompressoren (11 - 14) kaskadenartig betreiben kann, wobei, wenn es nötig ist, die Systemkapazität zu erniedrigen, um diese an die erwartete Nachfrage anzupassen, ein ausgewählter Luftkompressor (11 - 14) unwirksam gemacht wird, und, wenn es zu einem zukünftigen Zeitpunkt nötig ist, die Systemkapazität zu erhöhen, um die Systemkapazität an die erwartete Nachfrage anzupassen, der ausgewählte Luftkompresssor (11 - 14) wieder wirksam gemacht wird, und das Kontrollmittel (10) die Luftkompressoren (11 - 14) alternativerweise der Reihe nach betreiben kann, wobei, wenn es nötig ist, die Systemkapazität zu erniedrigen, um diese an die erwartete Nachfrage anzupassen, der erste Luftkompressor der wirksamen Luftkompressoren, die wirksam zu machen waren, unwirksam gemacht wird, und, wenn es nötig ist, die Systemkapazität zu erhöhen, um die Systemkapazität an die erwartete Nachfrage anzupassen, der erste Luftkompressor (11 - 14) der unwirksamen Luftkompressoren (11 - 14), die unwirksam zu machen waren, wieder wirksam gemacht wird, und daß das Kontrollmittel (10) aus der erwarteten Nachfrage und den in dem Speicher (M) des Kontrollmittels (10) gespeicherten Daten, als ob sie die Luftkompressoren (11 - 14) der Reihe nach betreibt, eine geschätzte Zeit für die Zeitdauer von dem Zeitpunkt, an welchem der nächste der wirksamen Luftkompressor unwirksam zu machen ist, zu dem Zeitpunkt berechnet, an welchem der Luftkompressor (11 - 14) wieder wirksam zu machen ist, wobei das Kontrollmittel (10), wenn die abgeschätzte Zeit kleiner als eine gegenwärtige Zeit ist, die Luftkompressoren (11 - 14) kaskadenartig betreibt und den Luftkompressor durch Bringen des Luftkompressores (11 - 14) in einen unbelasteten Zustand, in welchem der Luftkompressor (11 - 14) weiterhin läuft, aber nicht zu der Druckluftkapazität des Systems beiträgt, unwirksam macht, bis es nötig ist, die Systemkapazität wieder zu erhöhen, wenn der unwirksame Luftkompressor, der in einem unbelasteten Zustand läuft, wieder wirksam gemacht wird, und das Kontrollmittel (10), wenn die abgeschätzte Zeit größer als die gegenwärtige Zeit ist, die Luftkompressoren (11 - 14) der Reihe nach betreibt und den Luftkompressor (11 - 14) durch Bringen des Luftkompressors in einen Aus-Zustand unwirksam macht.

3. Verfahren nach Anspruch 1 oder 2, dadurch gekennzeichnet, daß die in dem Speicher (M) des Kontrollmittels (10) gespeicherten Daten von einem Bediener eingegebene Daten beinhalten, um das Kontrollmittel (10) zu veranlassen, zumindest einen der Luftkompressoren (11 - 14), die wirksam oder unwirksam gemacht werden sollen, bevorzugt vor einem Luftkompressor, der ansonsten von dem Kontrollmittel (10) ausgewählt werden würde, auszuwählen.

4. Verfahren nach einem der Ansprüche 1 bis 3, dadurch gekennzeichnet, daß die erwartete Nachfrage in Intervallen von neuem abgeschätzt wird, wobei die Länge der Intervalle von der Durchlaufzeit des Programms des Kontrollmittels (10) und der in dem Speicher (M) des Kontrollmittels (10) gespeicherten Daten abhängt, wobei diese Daten Daten beinhalten, die von zumindest einem Signal des Fühlmittels (20), das den Wert des variablen Parameters zu einer vorherigen Zeit anzeigt, abgeleitet werden.

5. Verfahren nach Anspruch 4, dadurch gekennzeichnet, daß die erwartete Nachfrage zum Zeitpunkt des Abschätzens durch die folgende Gleichung abgeschätzt wird:

$$(Q-C)\ t\ =\ R\ p,$$

wobei Q die komplette Kapazität der Luftkompressoren (11 - 14), die dem System an dem abgeschätzten Zeitpunkt Druckluft zuführen,
C die Nachfrage am Abschätzungszeitpunkt,
t die Zeit seit der letzten Abschätzung,
R die Speichergröße des Systems, und
p die aktuelle Änderung des variablen Parameters seit der letzten Schätzung der Nachfrage ist.

6. Verfahren nach einem der vorangegangenen Ansprüche, dadurch gekennzeichnet, daß der maximale und der minimale, von dem Kontrollmittel (10) erlaubte Wert des variablen Parameters durch das Kontrollmittel (10) innerhalb eines absoluten Betragsbereichs veränderbar ist.

## Revendications

1. Procédé pour le fonctionnement d'au moins trois compresseurs pneumatiques (11-14) dont chacun produit de l'air comprimé à l'état de marche, contribuant ainsi à une capacité d'air comprimé globale pour un système, le procédé comprenant la détection au moyen d'un capteur (20) de la valeur du paramètre variable du système, l'amenée d'un signal provenant du capteur (20) à un moyen de commande (10), la programmation du moyen de commande (10) pour évaluer à partir des informations stockées dans sa mémoire (M), et du signal provenant du capteur (20), les besoins escomptés en air comprimé pour le système dans l'avenir immédiat, caractérisé en ce qu'au moins l'un des compresseurs pneumatiques possède une capacité théorique nominale différente des autres, les moyens de commande sélectionnant au moins un compresseur pneumatique (11-14) à mettre en marche lorsqu'il s'agit d'augmenter la capacité du système de sorte que la capacité du système est au moins égale à ou proche des besoins escomptés pour l'avenir immédiat et les moyens de commande (10) sélectionnant au moins un compresseur pneumatique (11-14) à mettre hors service lorsqu'il s'agit de diminuer la capacité du système pour répondre aux besoins escomptés, de sorte que la capacité du système ne chute pas sensiblement au-dessous des besoins escomptés dans l'avenir immédiat, et lorsqu'un compresseur pneumatique sélectionné (11-14) doit être mis hors service, les moyens de commande (10) calculent une durée escomptée, à partir des besoins escomptés et des informations mémorisées, durée pendant laquelle le compresseur pneumatique sélectionné (11-14) est censé demeurer hors service avant d'être remis en marche, et lorsque la durée escomptée est supérieure à un temps prédéterminé, les moyens de commande (10) mettant le compresseur pneumatique sélectionné hors service en mettant le compresseur pneumatique (11-14) à l'état arrêt et lorsque la durée escomptée est inférieure au temps prédéterminé, les moyens de commande (10) mettant le compresseur pneumatique sélectionné (11-14) hors service en mettant le compresseur pneumatique (11-14) à l'étau "à vide" dans lequel le compresseur pneumatique sélectionné (11-14) continue à fonctionner mais ne contribue pas à la capacité d'air comprimé du système.

2. Procédé pour le fonctionnement d'au moins trois compresseurs pneumatiques (11-14) dont chacun produit de l'air comprimé à l'état de marche, contribuant ainsi à une capacité d'air comprimé totale d'un système, le procédé comprenant la détection au moyen d'un capteur (20) de la valeur d'un paramètre variable du système, à amener un signal provenant du capteur (20) à un moyen de commande (10), à programmer le moyen de commande (10) pour évaluer à partir des informations stockées dans sa mémoire (M), et du signal provenant du capteur (20), les besoins escomptés en air comprimé pour le système dans l'avenir immédiat, caractérisé en ce que les compresseurs pneumatiques (11-14) possèdent chacun la même capacité théorique nominale, et les moyens de commande (10) peuvent faire fonctionner les compresseurs pneumatiques (11-14) dans un mode de cascade dans lequel lorsqu'il s'agit de diminuer la capacité du système pour répondre à des besoins escomptés, un compresseur pneumatique sélectionné (11-14) est mis hors service et lorsqu'à un moment ultérieur il s'agit d'augmenter la capacité du système pour adapter celle-ci aux besoins escomptés du compresseur pneumatique sélectionné (11-14) est remis en marche, et alternativement dans un mode de séquençage au cours duquel lorsqu'il s'agit de diminuer la capacité du système pour répondre à des besoins escomptés, le premier compresseur pneumatique des compresseurs pneumatiques en fonctionnement à avoir été mis en service est mis hors service et lorsqu'il s'agit d'augmenter la capacité du système pour adapter celle-ci aux besoins escomptés, le premier compresseur pneumatique (11-14) parmi les compresseurs pneumatiques hors service (11-14) à avoir été mis hors service est remis en marche, les moyens de commande (10) calculant à partir des besoins escomptés et des informations stockées dans la mémoire (M) des moyens de commande (10), comme pour le fonctionnement de compresseurs pneumatiques (11-14) en mode de séquençage, une durée estimée à partir de laquelle le compresseur suivant parmi les compresseurs pneumatiques en fonctionnement doit être mis hors service jusqu'au moment où le compresseur pneumatique (11-14) doit être remis en marche et lorsque la durée évaluée est inférieure à un temps prédéterminé, les moyens de commande (10) faisant fonctionner les compresseurs pneumatiques (11-14) dans un mode en cascade, et mettant le compresseur pneumatique hors service en mettant le compresseur pneumatique (11-14) à l'état "à vide" dans lequel le compresseur pneumatique (11-14) continue à fonctionner mais ne contribue pas à la capacité d'air comprimé du système jusqu'au moment où cela s'avère nécessaire pour augmenter à nouveau la capacité du système lorsque le compresseur pneumatique hors service fonctionnant à l'état "à vide" est remis en marche, et lorsque la durée évaluée est supérieure au temps préétabli, les moyens de commande (10) faisant fonctionner les compresseurs pneumatiques (11-14) dans un mode de séquençage et mettant le compresseur pneumatique (11-14) hors service en le positionnant sur l'état arrêt.

3. Procédé selon la revendication 1 ou la revendication 2, caractérisé en ce que les informations stockées dans la mémoire (M) des moyens de commande (10) comprend l'entrée d'informations par un opérateur pour provoquer la sélection par les moyens de commande (10) d'au moins l'un des compresseurs pneumatiques (11-14) à mettre en service ou hors service en préférence à un compresseur pneumatique qui sinon serait sélectionné par les moyens de commande (10).

4. Procédé selon l'une quelconque des revendications 1 à 3, caractérisé en ce que les besoins escomptés sont réévalués à certains intervalles de temps, la durée des intervalles étant fonction d'un temps de cycle du programme des moyens de commande (10) et des informations stockées dans la mémoire (M) des moyens de commande (10) y compris les informations découlant d'au moins un signal provenant du capteur (20) indiquant la valeur du paramètre variable à un moment antérieur.

5. Procédé selon la revendication 4, caractérisé en ce que les besoins escomptés au moment de l'évaluation sont évalués en utilisant la formule :

$$(Q - C)t = R p$$

dans laquelle Q est la capacité totale des compresseurs pneumatiques (11-14) contribuant à l'air comprimé du système au moment évalué,

C représente les besoins au moment de l'évaluation,

t est la durée depuis la dernière évaluation,

R est la capacité de stockage du système, et

p est l'écart réel du paramètre variable depuis la dernière évaluation des besoins.

6. Procédé selon l'une quelconque des revendications précédentes, caractérisé en ce que les valeurs maximum et minimum du paramètre variable qui sont autorisées par les moyens de commande (10) peuvent être modifiées par les moyens de commande (10) à l'intérieur d'une plage de valeurs absolues.